# EUROPEAN PATENT SPECIFICATION

(11) **EP 3 636 405 B1**
(45) Date of publication and mention of the grant of the patent: **14.04.2021**
(21) Application number: 19202226.7
(22) Date of filing: 09.10.2019
(51) Int. Cl.: B29C 41/06, B29C 41/22, B29K 23/00, B65D 88/02, B65D 88/76, B65D 90/00, C02F 3/08, C02F 3/12, E03B 1/04, E03F 5/14, C02F 1/00, C02F 3/06, C02F 3/10

(54) **ROTOMOULDED WASTE WATER TREATMENT TANK AND MANUFACTURING METHOD**
ROTATIONSGEFORMTER ABWASSERBEHANDLUNGSBEHÄLTER UND HERSTELLUNGSVERFAHREN
RÉSERVOIR DE TRAITEMENT DES EAUX USÉES ROTOMOULÉ ET SON PROCÉDÉ DE FABRICATION

(30) Priority: 09.10.2018 BE 201805696
(43) Date of publication of application: 15.04.2020
(73) Proprietor: Eloy Water Group, 4140 Sprimont (BE)
(72) Inventor: DOUMEN, Pierre, 4140 Sprimont (BE); WILMET, Pol, 4140 Sprimont (BE); HICK, Patrick, 4140 Sprimont (BE); MEUNIER, Bertrand, 4140 Sprimont (BE)
(74) Representative: Gevers Patents

(56) References cited:
- FR-A1- 2 747 607
- Oxyfix ET AL: "Guide de l'usager - Gamme Oxyfix LG-90 MB", , 7 March 2016 (2016-03-07), pages 1-44, XP055602999, Retrieved from the Internet: URL:https://products.eloywater.com/ebs/ew_ products.nsf/993E9C866F525635C1257F9200556 148/$File/Guide_Usager-Oxyfix_LG-90.pdf [retrieved on 2019-07-05]
- X-Perco ET AL: "Guide de l'usager - X-Perco France QT 5 EH", , 27 September 2013 (2013-09-27), pages 1-38, XP055603000, Retrieved from the Internet: URL:https://products.eloywater.com/ebs/ew_ products.nsf/14CF751178A2D33EC1257F4C00458 D80/$File/Guide_usager-%20X-Perco27092013. pdf [retrieved on 2019-07-05]

## Description

The present invention relates to a rotomoulded tank for treating waste water flowing through said tank, which tank comprises at least one bio-compartment for a biological treatment of the waste water.

The tank comprises a rotomoulded outer shell which is formed by a rotomoulded thermoplastic material and, within said outer shell, at least one hollow rotomoulded part. The hollow rotomoulded part has portions which are integrated in the outer shell of the tank and which are overmoulded with the rotomoulded material of the outer shell so that the hollow rotomoulded part is rigidly fixed within the tank to the outer shell thereof.

Rotomoulded tanks for treating waste water are already disclosed in a number of patent publications, as for example in XP055602999.

FR 2 747 607 and US 2004/0011786 disclose septic tanks which are rotomoulded. To avoid collapsing of the tank by the pressure which may be exerted thereon in the ground channels traversing the tank are produced by means of cores during the rotomoulding process. These channels are completely isolated from the interior of the tank and are not used for transporting waste water within the tank.

FR 3 057 254 also discloses a rotomoulded tank. To support the top of the tank, tubular posts are placed in the mould before rotomoulding the tank. In this way, the tubular posts are overmoulded with the thermoplastic material of the shell and are thereby fixed thereto. The tubular posts extend entirely through the tank and their upper and lower extremities end outside the tank. The interior of the tubular posts is therefore again completely isolated from the interior of the tank and the tubular posts are also not used for accommodating the flow of water within the tank.

In practice, it is often required to transport the waste water in a waste water treatment tank from a higher level to a lower level or vice versa, in particular to create an upward flow of the waste water through the bio-compartment. An example of such a tank is the tank for treating domestic waste water which is sold by Eloy Water under the denomination Oxyfix®. The tank is made of concrete and comprises a first compartment, wherein the waste water is decanted, a second compartment which is aerated and which comprises a support medium arranged to carry a biofilm and a third compartment which forms a clarifier. In the second compartment, which is a bio-compartment, the waste water has to flow upwards, i.e. from the bottom to the top. In this way an optimal mixing and bio-logical treatment of the waste water can be obtained. For allowing the waste water to flow from the first compartment to the second one, pipes have to be installed which conduct the waste water from a certain level underneath the water level in the first compartment, through the concrete partition wall to the bottom of the second compartment. In a concrete tank, such piping can be bolted quite easily to the walls of the tank, which is not the case for rotomoulded tanks. Rotomoulded tanks indeed have only a limited wall thickness so that no screws can be applied directly into the rotomoulded material. When the piping is installed in a concrete tank, a drawback of the required piping is however still the cost thereof and the costs for installing it. Moreover, there is always a risk for the piping to become damaged, for example when cleaning the tank. Also at the transition between the bio-compartment and the clarifier, piping has to be provided to transport the waste water from the top of the bio-compartment to a lower, middle portion of the clarifier. The same problems and disadvantages are therefore caused by the piping between the bio-compartment and the clarifier.

A rotomoulded tank which comprises a rotomoulded outer shell and a hollow rotomoulded part which forms the transition wall between the first compartment and the second bio-compartment is sold by Eloy Water under the denomination X-Perco® QT. Most of the other X-Perco® tanks are made of concrete but the X-Perco® QT is a rotomoulded tank which comprises a hollow rotomoulded partition wall which is partially overmoulded with the rotomoulded material of the outer shell. The X-Perco® QT tank comprises a first compartment wherein the waste water is decanted and a second compartment which comprises a filter medium which is situated above the level of the waste water and which forms a so-called "trickling filter" through which the waste water flows downwards. Both compartments are separated from one another by the rotomoulded hollow rotomoulded partition wall. In such a lay-out, only a short piece of pipe is installed through the thermoplastic partition wall since the waste water from the first compartment has to be supplied not at the bottom but at the top of the bio-compartment. It can thus be fixed quite easily to the partition wall itself for example by clamping it in a horizontal opening which extends entirely through the double wall formed by the hollow rotomoulded part.

An object of the present invention is to provide a new rotomoulded waste water treatment tank wherein a channel for transporting the waste water from a lower level to a higher level or vice versa can easily be provided, in particular without having to install piping therein which need to be fixed to the relatively thin rotomoulded shell of the tank or to the relatively thin rotomoulded partition wall.

To this end, the tank according to the present invention is characterised in that said hollow rotomoulded part has at least one inlet and at least one outlet for the waste water flowing through the tank, said outlet being situated either at a lower or at a higher level than said inlet in the tank and said hollow rotomoulded part forming a transport compartment for transporting the waste water up or downwards within the tank between said lower and said higher levels.

The hollow rotomoulded part, which forms a transport compartment, does not need to be installed in the tank since it is automatically rigidly fixed to the outer shell of the tank by being placed as an insert in the mould used for rotomoulding the outer shell. Due to the fact that the hollow rotomoulded part is rotomoulded, it is initially completely closed so that no water can flow into or out of the hollow rotomoulded part. In order to obtain the transport channel that is needed for the waste water in the tank, the inlet and outlet openings have only to be applied at the required locations in the hollow rotomoulded part. The use of a completely closed hollow rotomoulded part as insert during the rotomoulding process, has moreover as advantage that the thermoplastic material used for producing the outer shell of the tank cannot penetrate into the hollow rotomoulded part and that the tank is also water-tight notwithstanding the fact that the hollow rotomoulded part is integrated in the outer shell of the tank.

In an embodiment of the tank according to present invention said at least one hollow rotomoulded part forms a partition wall dividing the tank in at least two compartments, which compartments comprise said at least one bio-compartment and at least one further compartment.

In this embodiment the hollow rotomoulded part has two functions namely the function of partition wall and the function of transport channel. An important saving of space can thus be achieved. On the other hand, no extra material or costs need to be made to provide the channel for transporting the waste water in the tank, in particular for transporting the waste water from a higher level in the upstream compartment to a lower level in the bio-compartment.

In an embodiment of the tank according to the invention, said bio-compartment comprises a support medium arranged to be covered with a biofilm, which support medium is preferably arranged to be submerged in said waste water and which bio-compartment is preferably aerated.

In such a preferred embodiment, it is advantageous to create an upward flow of the waste water through the bio-compartment.

For example this is not the case for the rotomoulded waste water treatment tank sold by Phyto-Plus Environnement under the denomination Stepurbio® which also comprises three compartments namely a decanting compartment, a bio-compartment and a clarifier compartment. Although, the waste water is removed from the bio-compartment at the top thereof, the waste water is not introduced therein at the bottom but instead at the top thereof, i.e. at the level at which it is also removed therefrom. Also in the clarifier compartment the waste water is not introduced in the middle but instead at the top. In comparison, in the present invention, the upward flow guaranties that the majority of the waste water goes through the biocompartment, thereby providing an improved waste water treatment.

At the same time, the bio-compartment is preferably aerated from the bottom portion so that also the oxygen containing gas flows upwards through the support medium with the biofilm.

In a particular embodiment of the tank according to the invention, said at least one further compartment comprises an upstream compartment which is situated upstream said bio-compartment and which is in particular arranged for decanting the waste water. Preferably, said outlet opening of the hollow rotomoulded part which forms the partition wall between the bio-compartment and said upstream compartment is situated at a lower level than said inlet opening so that the waste water enters the bio-compartment in a bottom portion thereof to create the preferred upward flow of waste water in the bio-compartment.

In a particular embodiment of the tank according to the invention, said at least one further compartment comprises a downstream compartment which is situated downstream said bio-compartment and which is in particular arranged for clarifying the waste water. Preferably, said inlet opening of the hollow rotomoulded part which forms the partition wall between the bio-compartment and said downstream compartment is situated at a higher level than said inlet opening so that the waste water is removed from the bio-compartment in a top portion thereof to create the preferred upward flow of waste water in the bio-compartment.

In an embodiment of the tank according to present invention the hollow rotomoulded part has a first bulge projecting into said further compartment, which first bulge has a bottom portion wherein the inlet opening of the hollow rotomoulded part is made, which inlet opening is preferably directed downwards.

In this embodiment the inlet opening of the hollow rotomoulded part can be situated at some distance below the water surface. In this way the waste water which arrives into the inlet opening is decanted since the solid material will either float on the waste water in the first compartment or will settle onto the bottom thereof. When the inlet opening is directed downwards, also no floating material that is starting to sink will arrive in the inlet opening. In this way, clogging of the channel formed by the hollow rotomoulded partition wall can be prevented.

In an embodiment of the tank according to present invention the hollow rotomoulded part, forming said partition wall, has a second bulge projecting in particular into said bio-compartment, which bulge has a top portion wherein a cleaning opening is made which is preferably directed upwards and which is arranged to enable to clean the interior of the hollow rotomoulded part.

The cleaning opening enables a quick and easy cleaning of the interior of the hollow partition wall.

In an embodiment of the tank according to the present invention, the transport compartment formed by said hollow rotomoulded part is arranged to receive a sump pump for pumping waste water out of said bio-compartment, the hollow rotomoulded part having a top wherein an access opening is made enabling to introduce the sump pump into the hollow rotomoulded part.

In this embodiment, the waste water can be removed from the bottom of the bio-compartment. In this way, a downward flow of water can be created therein.

Preferably, the hollow moulded part is arranged within said bio-compartment.

In this way, the hollow moulded part can be made tubular to occupy only a minimum of space in the tank.

Preferably, said bio-compartment comprises a filter medium, which filter medium is at least partially situated above the level of the waste water in the bio-compartment.

By means of the sump pump the water level can be kept sufficiently low. An efficient biological treatment can be achieved with the filter medium, notwithstanding the downward flow of waste water, when the filter medium is not submerged but forms instead a so-called "trickling filter".

Preferably, at one extremity said hollow rotomoulded part, which is arranged to receive a sump pump, is overmoulded with the rotomoulded material of a top portion of said outer shell whilst at the opposite extremity the hollow rotomoulded part is overmoulded with the rotomoulded material of a bottom portion of said outer shell.

The hollow rotomoulded part forms thus a transport compartment which extends entirely through the tank, i.e. from the bottom to the top thereof. The waste water can thus be pumped up from the bottom of the tank whilst the sump pump can be introduced in the tank from the top thereof.

In an embodiment of the tank according to the present invention, said outer shell and said hollow rotomoulded part are made of polyethylene or polypropylene.

Both polyethylene and polypropylene are suited to be rotomoulded.

The outer shell is preferably made of polyethylene, since polyethylene is less expensive than polypropylene. The hollow rotomoulded part can be made of polyethylene or polypropylene. An advantage of polyethylene is that it may adhere more strongly to the polyethylene of the outer shell than polypropylene. Polypropylene, on the other hand, may be advantageous in that it melts less quickly than polyethylene so that the hollow rotomoulded part may be more resistant to the high temperature of the mould used to rotomould the outer shell, especially when the rotomoulded part is relatively heavy so that the heated mould will exert a relatively large force onto the bottom edge of the rotomoulded part. Indeed, it is important for the hollow rotomoulded parts, which are positioned a inserts in this mould, not to become damaged therein, and remain in particular water tight.

In an embodiment of the tank according to the present invention, the rotomoulded material of said shell is curved outwards against at least one of said overmoulded portions of the hollow rotomoulded part, in particular so that, in a cross-section perpendicular to the outer shell, the distance over which the outer shell adheres to the edge of the hollow rotomoulded part is larger, in particular at least 50% larger, than the thickness of the shell next to said overmoulded portion.

Due to the larger contact surface between the material of the outer shell and the material of the hollow rotomoulded part, a stronger adhesion can be achieved.

The present invention also relates to a method for manufacturing a tank according to the invention, which method comprises the steps of:
- applying thermoplastic material in a mould and positioning said hollow rotomoulded part as an insert in said mould;
- moving the mould in accordance with a rotomoulding process by rotating the mould in particular around two substantially perpendicular rotation axes;
- heating the mould to melt the thermoplastic material contained therein;
- forming the shell of said tank by successive passes of said thermoplastic material over the inner surfaces of the mould and welding said portions of said hollow rotomoulded part by means of the molten thermoplastic material to the outer shell of the tank;
- cooling down the mould; and
- demoulding the produced tank.

In an embodiment of the method according to the invention, the hollow rotomoulded part is positioned in at least one recess in the surface of said mould, the recess forming a gap next to the rotomoulded part which is positioned therein.

In this way, the thermoplastic material used to produce the outer shell can penetrate into the gap next to the hollow rotomoulded part to produce said outwardly curved portion of the skin which adheres to the hollow rotomoulded part.

Further details and advantages of the invention will become apparent from the following description of some particular embodiments of the tank and the method according to the present invention. This description is given with reference to the annexed drawings wherein:
Figure 1 is a schematic longitudinal section through a first embodiment of a rotomoulded tank in accordance with the present invention;
Figure 2 shows, on a larger scale, a detail of Figure 1, more particularly of the connection between the hollow rotomoulded partition wall and the bottom of the tank and, also on a larger scale, the portion of the surface of the rotomould against which that portion of the shell of the tank was rotomoulded;
Figure 3 is a schematic sectional three-dimensional view on the hollow rotomoulded partition wall of the tank illustrated in Figure 1; and
Figure 4 is a schematic longitudinal section through a second embodiment of the rotomoulded tank according to the invention.

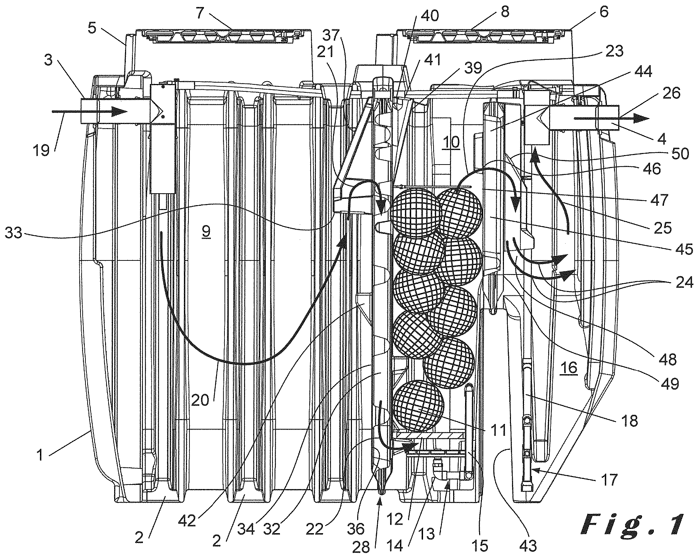

The tank illustrated in Figure 1 comprises a rotomoulded outer shell 1 which forms a closed tank. The walls of the outer shell 1 form vertical ribs 2 to increase the rigidity of the tank. In the left extremity of the tank is provided, at the top, an inlet 3 for the waste water, in particular for domestic waste water, whilst the right extremity of the tank is provided, also at the top, with an outlet 4 for the waste water that has been treated in the tank. At the top of the tank, the outer shell is provided with two access openings 5, 6 which are each closed off by means of a removable lid 7, 8.

The tank comprises three compartments. In the first compartment 9 a pre-treatment of the waste water is carried out. The waste water is in particular decanted. The heavier solids of the waste water are allowed to settle onto the bottom of the first compartment, to form a pre-treatment sludge, whilst the lighter solids float onto the waste water.

In the second compartment 10, i.e. the bio-compartment 10, the decanted waste water is subjected to a biological treatment. This compartment 10 comprises a support medium 11 that is intended to provide fixed surfaces in the bio-compartment 10, which have a large surface area so that a large amount of biofilm can be formed on this support medium 11. The support medium 11 may comprise blocks with upright holes therein, vertically suspended brushes, vertical tubes, pieces of tubes randomly stacked onto one another or plastic balls formed by small tubes, as illustrated schematically in Figure 1. The support medium 11 can thus also be formed by a fixed structure in the bio-compartment 10. When the medium 11 is a loose medium 11, a grid 12 is preferably provided in a bottom portion of the bio-compartment 10 which carries the support medium 11.

Underneath that grid 12, or more generally underneath the support medium 11, an aeration device 13 is preferably provided. In the embodiment illustrated in Figure 1, this aeration device 13 comprises two flat aeration heads 14 provided which are connected to an air supply duct 15 and which show openings through which the supplied air is released in the waste water. This air, or other oxygenated gas, rises through the support medium 11 in the bio-compartment 10 so that the bio-film formed onto the support medium 11 is an aerobic biofilm. The air rising through the bio-compartment 10 will also prevent clogging of the support medium 11.

The third compartment 16 is a clarifier compartment. The biologically treated waste water enters this clarifier compartment 16 at about 2/3^{th} of the height thereof. The bottom of the clarifier compartment 16 is funnel-shaped so that any solids that settle within the clarifier compartment 16 arrive at the lowest point thereof. At that point, an air lift device 17, which comprises a vertical pipe 18 wherein an upward water flow is created by supplying air in the bottom portion thereof, removes the solids and transport them back to the first compartment 9. At the top of the clarifier compartment 16, the clarified waste water exits the tank through the outlet 4.

The flow of the waste water through the tank is indicated schematically by means of the successive arrows 19 - 26.

The water is substantially at the same level in all of the compartiments 9, 10, 16. The waste water is introduced by the inlet 3 in the first compartment 9 at a level which is somewhat below the water level so that the waste water enters underneath the floating solids and doesn't disturb them. The waste water then flows generally horizontally to the outlet of the first compartment 9. In the second compartment 10, the waste water has to flow upwards through the support medium 11 so that the water leaving the first compartment 9 has to be transported downwards.

In the tank illustrated in Figure 1, the downward transport of the waste water between the first 9 and the second compartment 10 is not achieved by means of piping that has to be installed in the tank, but it is achieved by means of the transport channel that is formed by the partition wall 28 which separates the first compartment 9 from the second one 10.

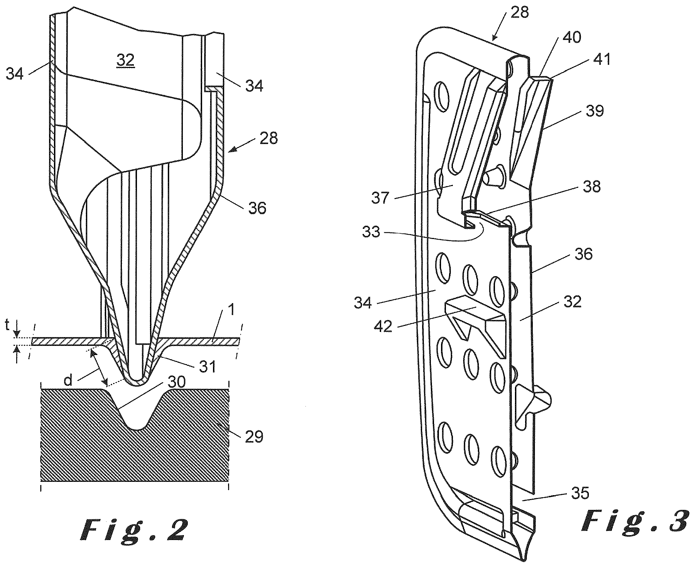

The partition wall 28 is formed by a hollow rotomoulded part 28 which has portions that are integrated in the outer shell 1 of the tank and that are overmoulded with the rotomoulded material of the outer shell 1 so that the hollow rotomoulded part 28 is rigidly fixed within the tank to the outer shell 1 thereof. Underneath the water level, i.e. along the bottom and the two side walls of the outer shell1, the hollow rotomoulded part 28 is preferably fixed to the outer shell 1 in the way as illustrated more into detail in Figure 2. Figure 2 illustrates a portion of the rotomould 29 wherein the hollow rotomoulded part 28 is first positioned, as insert, before closing the mould and rotomoulding the outer shell 1 of the tank. The hollow rotomoulded part 28 is more particularly positioned in a recess 30, formed by a groove, in the mould surface so that a gap remains in the recess 30 next to the hollow rotomoulded part 28. During the rotomoulding process, the thermoplastic material used to produce the outer shell 1 melts and flows in this gap to produce a portion 31 of the outer shell 1 that is curved outwards against the overmoulded portion of the hollow part 28. In this way, in a cross-section which is perpendicular to the outer shell 1, in particular in the cross-section as illustrated in Figure 2, the distance d over which the outer shell 1 adheres to the overmoulded portion of the hollow part 28 is larger, and is in particular at least 50% larger than the thickness t of the outer shell 1 next to said overmoulded portion. In this way, a strong adhesion is achieved between the hollow part 28 and the outer shell 1 assuring the required mechanical strength and the required water tightness of the tank.

At the top of the hollow rotomoulded part 28, the edge of this part 28 is situated at a distance from the mould surface and also from the inner surface of the outer shell 1 of the tank. This gap may be closed off by means of a strip applied between the rotomoulded part 28 and the surface of the mould so that the rotomoulded part 28 is also at the top connected to the outer shell 1. A connection is however not essential, and has not been illustrated in Figure 1, since this connection is situated above the level of the waste water in the tank.

The hollow rotomoulded part 28 forms a transport compartment 32 which is used for transporting the waste water from the first compartment 9 to the second compartment 10. This is achieved by making an inlet opening 33 in the side wall 34 of the hollow rotomoulded part 28 which is directed towards the first compartment 9 and an outlet opening 35 in the side wall 36 of the hollow rotomoulded part 28 which is directed towards the second compartment 10. The inlet opening 33 thus forms the outlet of the first compartment 9 whilst the outlet opening 35 forms the inlet of the second compartment 10. The outlet opening 35 is provided at a lower level than the inlet opening 33 so that the waste water flows downwards in the transport compartment 32 formed by the first hollow partition wall 28.

The inlet opening 33 is preferably directed downwards so that no solids may settle through the inlet opening 33 in the transport compartment 32 formed by the hollow partition wall 28. In the embodiment illustrated in Figures 1 and 3, this is achieved by providing the side wall 34 of the partition wall 28 with a first bulge 37 which projects into the first compartment 9 and which has a bottom portion 38 wherein the inlet opening 33 is made.

The other side wall 36 of the hollow partition wall 28 is also preferably provided with a bulge 39, which projects into the second compartment 10. This second bulge 39 has a top portion 40 wherein a cleaning opening 41 is made, which is directed upwards and which is arranged to clean the interior of the hollow partition wall 28. The cleaning opening 41 is indeed accessable through the access opening 6 which is situated above the second compartment 10.

Underneath the first bulge 37, the side wall 34 of the hollow partition wall 28 forms a step 42 projecting into the first compartment 9. A person entering the first compartment 9 can use this step to climb into and out of the first compartment 9.

The partition between the second compartment 10 and the third compartment 16 is first of all formed by an indentation 43 in the bottom of the outer shell 1, which indentation 43 extends to about half the height of the tank. The partition between these two compartments 10 and 16 is further also formed by a hollow rotomoulded part 44 forming a second hollow partition wall 44. At the bottom and at the lateral edges, this second hollow partition wall 44 is in the same way as the first hollow partition wall 28 integrated in the outer shell 1 of the tank.

The second hollow partition wall 44 also forms a second transport compartment 45 and is provided to this end with an inlet opening 46 in its side wall 47 directed towards the second compartment 10 and with an outlet opening 48 provided in its side wall 49 directed towards the third compartment 16. This outlet opening 48 is provided in the bottom portion of a bulge 50 and is directed downwards so that solids which settle in the third compartment 16 will not fall into the second transport compartment 45.

The outer shell 1 is preferably made of polyethylene. This material is suited to provide the required strength and is less expensive as polypropylene. The hollow rotomoulded parts 28 and 44 may also be made of polyethylene. Since they are smaller, they could however also be made of polypropylene. This has the advantage that there is no risk that the hollow rotomoulded parts 28 and 44 may become damaged by the relatively high temperature of the rotomould since polypropylene has a higher melting point than polyethylene. Polyethylene can also be adhered in molten state to polypropylene so that the required adhesion can be obtained.

In the first embodiment described hereabove, the support medium 11 for the bio-compartment 10 is entirely submerged in the waste water and the oxygen required for the proper functioning of the aerobic biofilm is provided by aerating the bio-compartment.

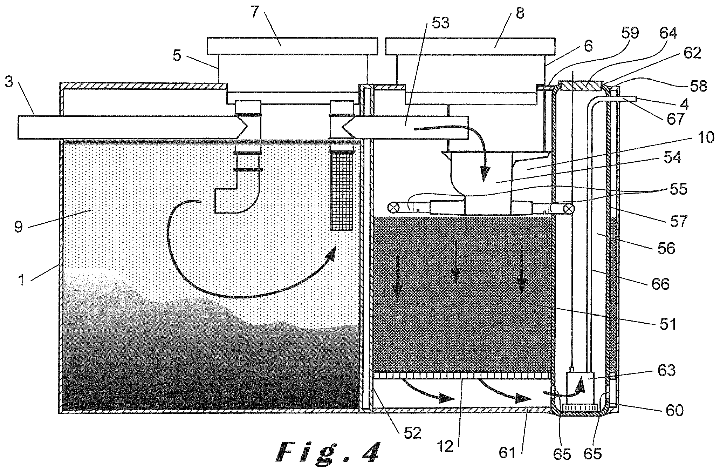

In the second embodiment, illustrated schematically in Figure 4, the bio-compartment 10 comprises a filter medium 51 which is not submerged but which is instead situated preferably entirely but at least partially above the level of the waste water in the bio-compartment 10. In such a filter setup, the waste water has to be supplied at the top of the filter medium 51 so that it can flow downwards through the filter medium 51. Since the filter medium 51 is not submerged in the water, a better aeration of the filter can be achieved which may lead to a better filter performance. The bio-compartment is also preferably aerated or at least ventilated (by a natural or a forced air flow) to provide the required oxygen for the aerobic bacteria on the filter medium 51.

The tank illustrated in Figure 4 comprises the outer shell 1 which is divided by a hollow rotomoulded partition wall 52 in two compartments 9 and 10. The first compartment 9 is again a decanter compartment whilst the second compartment 10 is the bio-compartment. In this embodiment the hollow rotomoulded partition wall 52 is not used as transport compartment since the waste water has not to supplied to a bottom portion of the bio-compartment but instead to the top thereof. The pipe 53 which passes straight through the hollow partition wall 52 guides the waste water from the first compartment to a container 54 which is connected to four arms 55 arranged for uniformly distributing the waste water over the top surface of the filter medium 51.

In an alternative embodiment, which is not illustrated in the drawings, the first compartment 52 could be formed by a first tank whilst the bio-compartment 10 could be formed by a second tank. The pipe 53 has then simply to be provided between the two tanks.

Within the bio-compartment 10 a transport compartment 56 is provided by means of a tubular hollow rotomoulded part 57. This tubular hollow rotomoulded part 57 is integrated at its top and at its bottom in a same way as the hollow partition walls 28, 44 and 52 in the outer shell 1 of the tank. The tubular rotomoulded part 57 is in particular at its upper extremity 58 overmoulded with the rotomoulded material of a top portion 59 of the outer shell 1 of the tank whilst at its opposite extremity 60 it is overmoulded with the rotomoulded material of a bottom portion 61 of the outer shell 1. The upper extremity 58 of the tubular rotomoulded part 57 is thus accessible from the top of the tank. An access opening 62 is made in this upper extremity 58 through which a sump pump 63 can be lowered into the transport compartment 56 formed by the tubular rotomoulded part 57. The access opening 62 is closed off by means of a lid 64.

At the bottom of the tubular rotomoulded part 57 lateral inlet openings 65 are made so that water can flow from the bio-compartment 10 into the transport compartment 56. The sump pump 63 is provided with a flexible hose 66 that can be connected to an outlet pipe 67 which extends, preferably above the water level, through the outer shell 1 and through the tubular rotomoulded part 57 to be able to pump the treated waste water out of the tank.

For manufacturing the tanks according to the present invention, in particular for manufacturing the outer shells 1 and the hollow rotomoulded parts 28, 44, 52 and 57 which are integrated therein within the interior of the tank, the following method can be followed.

The hollow rotomoulded parts are first produced by rotomoulding in different rotomoulds having a shape which is the negative of the rotomoulded parts. In this way, they are normally completely closed.

The produced hollow rotomoulded parts are then positioned, as inserts, in a rotomould which has a shape which is the negative of the outer shell of the tank. A thermoplastic material is also applied in this rotomould, in particular in the form of a powder.

The mould is subsequently moved in accordance with a rotomoulding process. According to one possible rotomoulding process, the mould is rotated around two substantially perpendicular rotation axes.

The mould is heated to melt the thermoplastic material which is contained therein. Due to the movements of the rotomould, the thermoplastic material is distributed over its mould surface and by successive passes of the thermoplastic material over the mould surface, the molten thermoplastic material forms the outer shell. At the locations where the hollow rotomoulded inserts are situated against or close to the mould surface, the molten thermoplastic material flows against the inserts and welds them to the outer shell. The rotomould is cooled down so that the molten thermoplastic material solidifies, the rotomould is opened and the produced tank, comprising the outer shell and the inserts integrated therein, is removed from the mould.

## Claims

1. A rotomoulded tank for treating waste water flowing through said tank, which tank comprises a rotomoulded outer shell (1) which is formed by a rotomoulded thermoplastic material and, within said outer shell (1), at least one hollow rotomoulded part (28, 44, 57) which has portions integrated in the outer shell (1) of the tank and overmoulded with the rotomoulded material of the outer shell (1) so that the hollow rotomoulded part (28, 44, 57) is rigidly fixed within the tank to the outer shell (1) thereof, the tank comprising at least one bio-compartment (10) for a biological treatment of the waste water,
**characterised in that**
said hollow rotomoulded part (28, 44, 57) has at least one inlet (33, 46, 65) and at least one outlet (35, 48, 4) for the waste water flowing through the tank, said outlet (35, 48, 4) being situated either at a lower or at a higher level than said inlet (33, 46, 65) in the tank and said hollow rotomoulded part (28, 44, 57) forming a transport compartment (32, 45, 56) for transporting the waste water up or downwards within the tank between said lower and said higher levels.

2. A tank according to claim 1, **characterised in that** said at least one hollow rotomoulded part (28, 44) forms a partition wall dividing the tank in at least two compartments (9, 10, 16), which compartments comprise said at least one bio-compartment (10) and at least one further compartment (9, 16).

3. A tank according to claim 2, **characterised in that** said hollow rotomoulded part (28) has a first bulge (37) projecting into said further compartment (9), which first bulge (37) has a bottom portion (38) wherein the inlet opening (33) of the hollow rotomoulded part (28) is made, which inlet opening (33) is preferably directed downwards.

4. A tank according to claim 2 or 3, **characterised in that** said bio-compartment (10) comprises a support medium (11) arranged to be covered with a biofilm, which support medium (11) is preferably arranged to be submerged in said waste water and which bio-compartment (10) is preferably aerated.

5. A tank according to any one of the claims 2 to 4, **characterised in that** said hollow rotomoulded part (28) has a second bulge (39) projecting in particular into said bio-compartment (10), which bulge (39) has a top portion (40) wherein a cleaning opening (41) is made which is preferably directed upwards and which is arranged to enable to clean the interior of the hollow rotomoulded part (28).

6. A tank according to any one of the claims 2 to 5, **characterised in that** said at least one further compartment (9, 16) comprises an upstream compartment (9) which is situated upstream said bio-compartment (10) and which is in particular arranged for decanting the waste water.

7. A tank according to claim 6, **characterised in that** said outlet opening (35) of the hollow rotomoulded part (28) which forms the partition wall between the bio-compartment (10) and said upstream compartment (9) is situated at a lower level than said inlet opening (33) so that the waste water enters the bio-compartment (10) in a bottom portion thereof to create an upward flow of waste water in the bio-compartment (10).

8. A tank according to any one of the claims 2 to 7, **characterised in that** said at least one further compartment (9, 16) comprises a downstream compartment (16) which is situated downstream said bio-compartment (10) and which is in particular arranged for clarifying the waste water.

9. A tank according to claim 8, **characterised in that** said inlet opening (46) of the hollow rotomoulded part (44) which forms the partition wall between the bio-compartment (10) and said downstream compartment (16) is situated at a higher level than said outlet opening (48) thereof so that the waste water is removed from the bio-compartment (10) in a top portion thereof to create an upward flow of waste water in the bio-compartment (10).

10. A tank according to claim 1, **characterised in that** the transport compartment (56) formed by said hollow rotomoulded part (57) is arranged to receive a sump pump (63) for pumping waste water out of said bio-compartment (10), the hollow rotomoulded part (57) having a top wherein an access opening (62) is made enabling to introduce the sump pump (63) into the hollow rotomoulded part (57).

11. A tank according to claim 10, **characterised in that** said hollow moulded part (57) is arranged within said bio-compartment (10).

12. A tank according to claim 11, **characterised in that** said bio-compartment (10) comprises a filter medium (51), which filter medium (51) is at least partially situated above the level of the waste water in the bio-compartment (10).

13. A tank according to any one of the claims 10 to 12, **characterised in that** at one extremity (58) said hollow rotomoulded part (57) is overmoulded with the rotomoulded material of a top portion (59) of said outer shell (1) whilst at the opposite extremity (60) the hollow rotomoulded part (57) is overmoulded with the rotomoulded material of a bottom portion (61) of said outer shell (1).

14. A tank according to any one of the claims 1 to 13, **characterised in that** said outer shell (1) and said hollow rotomoulded part (28, 44, 57) are made of polyethylene or polypropylene, with the outer shell (1) being preferably made of polyethylene and the hollow rotomoulded part (28, 44, 57) of polyethylene or polypropylene.

15. A tank according to any one of the claims 1 to 14, **characterised in that** the rotomoulded material of said shell (1) is curved outwards against at least one of said overmoulded portions of the hollow rotomoulded part (28, 44, 57), in particular so that, in a cross-section perpendicular to the outer shell, the distance (d) over which the outer shell (1) adheres to the overmoulded portion of the hollow rotomoulded part (28, 44, 57) is larger, in particular at least 50% larger, than the thickness (t) of the shell (1) next to said overmoulded portion.

16. A method for manufacturing a tank according to any one of the claims 1 to 15, **characterised in that** it comprises the steps of:
- positioning said hollow rotomoulded part (28, 44, 57) as an insert in a mould (29) and applying thermoplastic material in said mould (29);
- moving the mould (29) in accordance with a rotomoulding process by rotating the mould (29) in particular around two substantially perpendicular rotation axes;
- heating the mould (29) to melt the thermoplastic material contained therein;
- forming the shell (1) of said tank by successive passes of said thermoplastic material over the inner surfaces of the mould (29) and welding said portions of said hollow rotomoulded part (28, 44, 57) by means of the molten thermoplastic material to the outer shell (1) of the tank;
- cooling down the mould (29); and
- demoulding the produced tank.

17. A method according to claim 16, **characterised in that** the hollow rotomoulded part (28, 44, 57) is positioned in at least one recess (30) in the surface of said mould (29), the recess (30) forming a gap next to the rotomoulded part (28, 44, 57) which is positioned therein.

## Patentansprüche

1. Rotationsgeformter Tank zur Aufbereitung von Schmutzwasser, das durch den Tank fließt, wobei der Tank eine rotationsgeformte Außenhülle (1), die aus einem rotationsgeformten thermoplastischen Material gebildet ist, und innerhalb der Außenhülle (1) mindestens ein hohles rotationsgeformtes Teil (28, 44, 57) umfasst, das in die Außenhülle (1) des Tanks integrierte Abschnitte aufweist und mit dem rotationsgeformten Material der Außenhülle (1) umspritzt ist, sodass das hohle rotationsgeformte Teil (28, 44, 57) starr innerhalb des Tanks an seiner Außenhülle (1) befestigt ist, wobei der Tank mindestens ein Bioabteil (10) für eine biologische Aufbereitung von Schmutzwasser umfasst,
**dadurch gekennzeichnet, dass**
das hohle rotationsgeformte Teil (28, 44, 57) mindestens einen Einlass (33, 46, 65) und mindestens einen Auslass (35, 48, 4) für das Schmutzwasser aufweist, das durch den Tank fließt, wobei der Auslass (35, 48, 4) entweder auf einer niedrigeren oder auf einer höheren Ebene liegt als der Einlass (33, 46, 65) in dem Tank und das hohle rotationsgeformte Teil (28, 44, 57) ein Transportabteil (32, 45, 56) zum Transportieren des Schmutzwassers nach oben oder unten innerhalb des Tankts zwischen der niedrigeren und der höheren Ebene bildet.

2. Tank nach Anspruch 1, **dadurch gekennzeichnet, dass** das mindestens eine hohle rotationsgeformte Teil (28, 44) eine Trennwand bildet, die den Tank in mindestens zwei Abteile (9, 10, 16) teilt, wobei die Abteile das mindestens eine Bioabteil (10) und mindestens ein weiteres Abteil (9, 16) umfassen.

3. Tank nach Anspruch 2, **dadurch gekennzeichnet, dass** das hohle rotationsgeformte Teil (28) eine erste Wölbung (37) aufweist, die sich in das weitere Abteil (9) fortsetzt, wobei die erste Wölbung (37) einen Bodenabschnitt (38) aufweist, wobei die Einlassöffnung (33) des hohlen rotationsgeformten Teils (28) hergestellt ist, wobei die Einlassöffnung (33) bevorzugt nach unten gerichtet ist.

4. Tank nach Anspruch 2 oder 3, **dadurch gekennzeichnet, dass** das Bioabteil (10) ein Stützmedium (11) umfasst, das eingerichtet ist, mit einem Biofilm abgedeckt zu werden, wobei das Stützmedium (11) bevorzugt eingerichtet ist, in das Schmutzwasser eingetaucht zu werden und das Bioabteil (10) bevorzugt belüftet ist.

5. Tank nach einem der Ansprüche 2 bis 4, **dadurch gekennzeichnet, dass** das hohle rotationsgeformte Teil (28) eine zweite Wölbung (39) aufweist, die sich insbesondere in das Bioabteil (10) fortsetzt, wobei die Wölbung (39) einen Oberseitenabschnitt (40) aufweist, wobei eine Reinigungsöffnung (41) hergestellt ist, die bevorzugt nach oben gerichtet ist und die eingerichtet ist zu ermöglichen, das Innere des hohlen rotationsgeformten Teils (28) zu reinigen.

6. Tank nach einem der Ansprüche 2 bis 5, **dadurch gekennzeichnet, dass** das mindestens eine weitere Abteil (9, 16) ein stromaufwärtiges Abteil (9) umfasst, das stromaufwärts des Bioabteils (10) liegt und das insbesondere zum Umfüllen des Schmutzwassers eingerichtet ist.

7. Tank nach Anspruch 6, **dadurch gekennzeichnet, dass** die Auslassöffnung (35) des hohlen rotationsgeformten Teils (28), das die Trennwand zwischen dem Bioabteil (10) und dem stromaufwärtigen Abteil (9) bildet, auf einer niedrigeren Ebene als die Einlassöffnung (33) liegt, sodass das Schmutzwasser in einem Bodenabschnitt davon in das Bioabteil (10) gelangt, um einen Aufwärtsfluss von Schmutzwasser in dem Bioabteil (10) zu erzeugen.

8. Tank nach einem der Ansprüche 2 bis 7, **dadurch gekennzeichnet, dass** das mindestens eine weitere Abteil (9, 16) ein stromabwärtiges Abteil (16) umfasst, das stromabwärts des Bioabteils (10) liegt und das insbesondere zum Klären des Schmutzwassers eingerichtet ist.

9. Tank nach Anspruch 8, **dadurch gekennzeichnet, dass** die Einlassöffnung (46) des hohlen rotationsgeformten Teils (44), das die Trennwand zwischen dem Bioabteil (10) und dem stromabwärtigen Abteil (16) bildet, auf einer höheren Ebene als seine Auslassöffnung (48) liegt, sodass das Schmutzwasser von dem Bioabteil (10) in einem Oberseitenabschnitt davon abgeführt wird, um einen Aufwärtsfluss von Schmutzwasser in dem Bioabteil (10) zu erzeugen.

10. Tank nach Anspruch 1, **dadurch gekennzeichnet, dass** das Transportabteil (56), das durch das hohle rotationsgeformte Teil (57) gebildet wird, eingerichtet ist, eine Sumpfpumpe (63) zum Pumpen von Schmutzwasser aus dem Bioabteil (10) aufzunehmen, wobei das hohle rotationsgeformte Teil (57) eine Oberseite aufweist, wobei eine Zugangsöffnung (62) hergestellt ist um zu ermöglichen, die Sumpfpumpe (63) in das hohle rotationsgeformte Teil (57) einzusetzen.

11. Tank nach Anspruch 10, **dadurch gekennzeichnet, dass** das hohle geformte Teil (57) innerhalb des Bioabteils (10) eingerichtet ist.

12. Tank nach Anspruch 11, **dadurch gekennzeichnet, dass** das Bioabteil (10) ein Filtermedium (51) umfasst, wobei das Filtermedium (51) mindestens teilweise über der Ebene des Schmutzwassers in dem Bioabteil (10) liegt.

13. Tank nach einem der Ansprüche 10 bis 12, **dadurch gekennzeichnet, dass** an einem äußersten Ende (58) das hohle rotationsgeformte Teil (57) mit dem rotationsgeformten Material eines Oberseitenabschnitts (59) der Außenhülle (1) umspritzt wird, während beim entgegengesetzten äußersten Ende (60) das hohle rotationsgeformte Teil (57) mit dem rotationsgeformten Material eines Bodenabschnitts (61) der Außenhülle (1) umspritzt wird.

14. Tank nach einem der Ansprüche 1 bis 13, **dadurch gekennzeichnet, dass** die Außenhülle (1) und das hohle rotationsgeformte Teil (28, 44, 57) aus Polyethylen oder Polypropylen hergestellt sind, wobei die Außenhülle (1) bevorzugt aus Polyethylen und das hohle rotationsgeformte Teil (28, 44, 57) aus Polyethylen oder Polypropylen hergestellt ist.

15. Tank nach einem der Ansprüche 1 bis 14, **dadurch gekennzeichnet, dass** das rotationsgeformte Material der Hülle (1) gegen mindestens einen der umspritzten Abschnitte des hohlen rotationsgeformten Teils (28, 44, 57) nach außen gekrümmt ist, insbesondere so, dass in einem Querschnitt senkrecht zu der Außenhülle, der Abstand (d) über den die Außenhülle (1) an dem umspritzten Abschnitt des hohle rotationsgeformten Teils (28, 44, 57) anhaftet, größer ist, insbesondere mindestens 50% größer, als die Dicke (t) der Hülle (1) neben dem umspritzten Abschnitt.

16. Verfahren zur Herstellung eines Tanks nach einem der Ansprüche 1 bis 15, **dadurch gekennzeichnet, dass** es die Schritte umfasst zum:
- Positionieren des hohlen rotationsgeformten Teils (28, 44, 57) als einen Einsatz in einer Gussform (29) und Aufbringen von thermoplastischem Material in der Gussform (29);
- Bewegen der Gussform (29) in Übereinstimmung mit einem Rotationsformungsprozess, indem die Gussform (29) insbesondere um zwei im Wesentlichen senkrechte Rotationsachsen rotiert wird;
- Erwärmen der Gussform (29), um das darin enthaltene thermoplastische Material zu schmelzen;
- Bilden der Hülle (1) des Tanks durch aufeinanderfolgende Durchgänge des thermoplastischen Materials über den inneren Oberflächen der Gussform (29) und Schweißen der Abschnitte des hohlen rotationsgeformten Teils (28, 44, 57) mittels des geschmolzenen thermoplastischen Materials an die Außenhülle (1) des Tanks;
- Herunterkühlen der Gussform (29); und
- Entformen des erstellten Tanks.

17. Verfahren nach Anspruch 16, **dadurch gekennzeichnet, dass** das hohle rotationsgeformte Teil (28, 44, 57) in mindestens einer Vertiefung (30) in der Oberfläche der Gussform (29) positioniert ist, wobei die Vertiefung (30) einen Spalt neben dem rotationsgeformten Teil (28, 44, 57) bildet, das darin positioniert ist.

## Revendications

1. Réservoir rotomoulé pour traiter des eaux usées s'écoulant à travers ledit réservoir, lequel réservoir comprend une coque externe rotomoulée (1) qui est formée par un matériau thermoplastique rotomoulé et, à l'intérieur de ladite coque externe (1), au moins une pièce rotomoulée creuse (28, 44, 57) qui présente des parties intégrées dans la coque externe (1) du réservoir et surmoulées avec le matériau rotomoulé de la coque externe (1) de telle sorte que la pièce rotomoulée creuse (28, 44, 57) est fixée de manière rigide à l'intérieur du réservoir à sa coque externe (1), le réservoir comprenant au moins un bio-compartiment (10) pour un traitement biologique des eaux usées,
**caractérisé en ce que**
ladite pièce rotomoulée creuse (28, 44, 57) a au moins une entrée (33, 46, 65) et au moins une sortie (35, 48, 4) pour les eaux usées s'écoulant à travers le réservoir, ladite sortie (35, 48, 4) étant située soit à un niveau inférieur soit à un niveau supérieur par rapport à ladite entrée (33, 46, 65) dans le réservoir et ladite pièce rotomoulée creuse (28, 44, 57) formant un compartiment de transport (32, 45, 56) pour transporter les eaux usées vers le haut ou vers le bas à l'intérieur du réservoir entre lesdits niveaux inférieur et supérieur.

2. Réservoir selon la revendication 1, **caractérisé en ce que** ladite au moins une pièce rotomoulée creuse (28, 44) forme une cloison divisant le réservoir en au moins deux compartiments (9, 10, 16), lesquels compartiments comprennent ledit au moins un bio-compartiment (10) et au moins un compartiment supplémentaire (9, 16).

3. Réservoir selon la revendication 2, **caractérisé en ce que** ladite pièce rotomoulée creuse (28) présente un premier renflement (37) faisant saillie dans ledit compartiment supplémentaire (9), lequel premier renflement (37) a une partie inférieure (38) où l'ouverture d'entrée (33) de la pièce rotomoulée creuse (28) est réalisée, laquelle ouverture d'entrée (33) est de préférence dirigée vers le bas.

4. Réservoir selon la revendication 2 ou 3, **caractérisé en ce que** ledit bio-compartiment (10) comprend un milieu de support (11) agencé pour être recouvert d'un biofilm, lequel milieu de support (11) est de préférence agencé de manière à être immergé dans lesdites eaux usées et lequel bio-compartiment (10) est de préférence aéré.

5. Réservoir selon l'une quelconque des revendications 2 à 4, **caractérisé en ce que** ladite pièce rotomoulée creuse (28) présente un second renflement (39) faisant saillie en particulier dans ledit bio-compartiment (10), lequel renflement (39) présente une partie supérieure (40) où est réalisée une ouverture de nettoyage (41) qui est de préférence dirigée vers le haut et qui est agencée pour permettre de nettoyer l'intérieur de la pièce rotomoulée creuse (28).

6. Réservoir selon l'une quelconque des revendications 2 à 5, **caractérisé en ce que** ledit au moins un compartiment supplémentaire (9, 16) comprend un compartiment amont (9) qui est situé en amont dudit bio-compartiment (10) et qui est en particulier agencé pour décanter les eaux usées.

7. Réservoir selon la revendication 6, **caractérisé en ce que** ladite ouverture de sortie (35) de la pièce rotomoulée creuse (28) qui forme la cloison entre le bio-compartiment (10) et ledit compartiment amont (9) est située à un niveau inférieur à ladite ouverture d'entrée (33) de telle sorte que les eaux usées pénètrent dans le bio-compartiment (10) dans une partie inférieure de celui-ci pour créer un écoulement ascendant d'eaux usées dans le bio-compartiment (10).

8. Réservoir selon l'une quelconque des revendications 2 à 7, **caractérisé en ce que** ledit au moins un compartiment supplémentaire (9, 16) comprend un compartiment aval (16) qui est situé en aval dudit bio-compartiment (10) et qui est en particulier agencé pour clarifier les eaux usées.

9. Réservoir selon la revendication 8, **caractérisé en ce que** ladite ouverture d'entrée (46) de la pièce rotomoulée creuse (44) qui forme la cloison entre le bio-compartiment (10) et ledit compartiment aval (16) est située à un niveau supérieur à ladite ouverture de sortie (48) de celle-ci de sorte que l'eau usée est retirée du bio-compartiment (10) dans une partie supérieure de celui-ci pour créer un écoulement ascendant d'eaux usées dans le bio-compartiment (10).

10. Réservoir selon la revendication 1, **caractérisé en ce que** le compartiment de transport (56) formé par ladite pièce rotomoulée creuse (57) est agencé pour recevoir une pompe de vidange (63) pour pomper des eaux usées hors dudit bio-compartiment (10), la pièce rotomoulée creuse (57) présentant un sommet où est réalisée une ouverture d'accès (62) permettant d'introduire la pompe de vidange (63) dans la pièce rotomoulée creuse (57).

11. Réservoir selon la revendication 10, **caractérisé en ce que** ladite pièce moulée creuse (57) est agencée à l'intérieur dudit bio-compartiment (10).

12. Réservoir selon la revendication 11, **caractérisé en ce que** ledit bio-compartiment (10) comprend un milieu filtrant (51), lequel milieu filtrant (51) est au moins partiellement situé au-dessus du niveau des eaux usées dans le bio-compartiment (10).

13. Réservoir selon l'une quelconque des revendications 10 à 12, **caractérisé en ce qu'**à une extrémité (58), ladite pièce rotomoulée creuse (57) est surmoulée avec le matériau rotomoulé d'une partie supérieure (59) de ladite coque externe (1) tandis qu'à l'extrémité opposée (60), la pièce rotomoulée creuse (57) est surmoulée avec le matériau rotomoulé d'une partie inférieure (61) de ladite coque externe (1).

14. Réservoir selon l'une quelconque des revendications 1 à 13, **caractérisé en ce que** ladite coque externe (1) et ladite pièce rotomoulée creuse (28, 44, 57) sont réalisées en polyéthylène ou polypropylène, la coque externe (1) étant réalisée de préférence en polyéthylène et la pièce rotomoulée creuse (28, 44, 57) en polyéthylène ou polypropylène.

15. Réservoir selon l'une quelconque des revendications 1 à 14, **caractérisé en ce que** le matériau rotomoulé de ladite coque (1) est incurvé vers l'extérieur contre au moins l'une desdites parties surmoulées de la pièce rotomoulée creuse (28, 44, 57), en particulier de sorte que, dans une section transversale perpendiculaire à la coque externe, la distance (d) sur laquelle la coque externe (1) vient en adhérence sur la partie surmoulée de la pièce creuse rotomoulée (28, 44, 57) est plus grande, en particulier au moins 50 % plus grande, que l'épaisseur (t) de la coque (1) à côté de ladite pièce surmoulée.

16. Procédé de fabrication d'un réservoir selon l'une quelconque des revendications 1 à 15, **caractérisé en ce qu'**il comprend les étapes consistant à :
- positionner ladite pièce rotomoulée creuse (28, 44, 57) sous la forme d'un insert dans un moule (29) et appliquer un matériau thermoplastique dans ledit moule (29) ;
- déplacer le moule (29) selon un procédé de rotomoulage en faisant tourner le moule (29) en particulier autour de deux axes de rotation sensiblement perpendiculaires ;
- chauffer le moule (29) pour faire fondre le matériau thermoplastique contenu en soin sein ;
- former la coque (1) dudit réservoir par passes successives dudit matériau thermoplastique sur les surfaces internes du moule (29) et souder lesdites parties de ladite pièce rotomoulée creuse (28, 44, 57) au moyen du matériau thermoplastique fondu à la coque externe (1) du réservoir ;
- refroidir le moule (29) ; et
- démouler le réservoir produit.

17. Procédé selon la revendication 16, **caractérisé en ce que** la pièce rotomoulée creuse (28, 44, 57) est positionnée dans au moins un évidement (30) dans la surface dudit moule (29), l'évidement (30) formant un espace à côté de la pièce rotomoulée (28, 44, 57) qui est positionnée en son sein.
